# EUROPÄISCHE PATENTSCHRIFT

(11) **EP 1 218 436 B1**
(45) Veröffentlichungstag und Bekanntmachung des Hinweises auf die Patenterteilung: **17.03.2004**
(21) Anmeldenummer: 00962414.9
(22) Anmeldetag: 31.08.2000
(51) Int. Cl.: C08G 64/14, C08L 69/00

(54) **BEHÄLTER AUS VERZWEIGTEM POLYCARBONAT**
CONTAINERS MADE OF A BRANCHED POLYCARBONATE
CONTENANT REALISE EN POLYCARBONATE RAMIFIE

(30) Priorität: 13.09.1999 DE 19943642
(43) Veröffentlichungstag der Anmeldung: 03.07.2002
(73) Patentinhaber: Bayer MaterialScience AG, 51368 Leverkusen (DE)
(72) Erfinder: HORN, Klaus, 41539 Dormagen (DE); HUFEN, Ralf, 47239 Duisburg (DE); ALEWELT, Wolfgang, 47809 Krefeld (DE); GEBAUER, Peter, 53797 Lohmar (DE); BRUYNSEELS, Franky, B-9170 Sint-Gillis-Waas (BE)
(86) Internationale Anmeldenummer: PCT/EP2000/008471
(87) Internationale Veröffentlichungsnummer: WO 2001/019892

(56) Entgegenhaltungen:
- EP-A- 0 411 433
- EP-A- 0 699 685
- US-A- 5 367 044

## Beschreibung

Die vorliegende Erfindung betrifft Behälter aus verzweigtem Polycarbonat, ihre Herstellung und ihre Verwendung und verzweigtes Polycarbonat.

Behälter aus Polycarbonat sind bekannt.

Behälter aus Polycarbonat weisen zahlreiche vorteilhafte Eigenschaften wie z.B. hohe Transparenz, gute mechanische Eigenschaften, hohe Beständigkeit gegen Umwelteinflüsse und lange Lebensdauer, sowie geringes Gewicht und leichte, kostengünstige Herstellbarkeit auf.

Die Herstellung der Behältern aus Polycarbonat erfolgt beispielsweise nach dem Extrusionsblasverfahren oder nach dem Spritzblasverfahren.

Im Extrusionsblasverfahren wird in der Regel mit einem Einwellenextruder das Granulat aufgeschmolzen und durch eine Düse zu einem frei stehenden Schlauch geformt, der anschließend von einer Blasform umschlossen wird, die den Schlauch am unteren Ende zusammenquetscht. Innerhalb der Form wird der Schlauch aufgeblasen, so daß der Schlauch die gewünschte Formgebung erhält. Nach einer Kühlzeit wird die Form geöffnet und der Hohlkörper kann entnommen werden (genauer beschrieben z.B. bei Brinkschröder, F. J. "Polycarbonate" in Becker, Braun, Kunststoff-Handbuch, Band 3/1, Polycarbonate, Polyacetale, Polyester, Celluloseester, Carl Hanser Verlag, München, Wien 1992, Seiten 257 bis 264).

Für das Extrusionsblasverfahren ist es von Vorteil, ein stark strukturviskoses Polycarbonat zu verwenden, damit eine hohe Schmelzestandfestigkeit gegeben ist. Verzweigte Polycarbonate sind besonders strukturviskos.

Beim Spritzblasverfahren handelt es sich um eine Kombination aus Spritzgießen und Blasformen.

Das Verfahren läuft in drei Stufen ab:
1) Spritzgießen des Vorformlings im plastischen Temperaturbereich des Polycarbonates
2) Aufblasen des Vorformlings im thermoplatischen Bereich des Polycarbonates (der Kern des Spritzgießwerkzeugs ist gleichzeitig der Blasdom)
3) Abstreifen des Hohlkörpers und gegebenenfalls Kühlen des Blasdoms mit Luft
(genauer beschrieben z.B. bei Anders, S., Kaminski, A., Kappenstein, R.,"Polycarbonate" in Becker,/Braun, Kunststoff-Handbuch, Band 3/1, Polycarbonate, Polyacetale, Polyester, Celluloseester, Carl Hanser Verlag, München, Wien 1992, Seiten 223 bis 225).

Die bekannten Behälter aus Polycarbonat weisen den Nachteil auf, daß sie bestimmte Anforderungen des praktischen Einsatzes nicht erfüllen. So kann es bei den bekannten Behältern aus Polycarbonat bei starker mechanischer Belastung zum Bersten der Behälter kommen. Dies kann zum Beispiel dann eintreten, wenn ein mit Flüssigkeit gefüllter Behälter aus großer Höhe auf den Boden fällt, zum Beispiel von der Ladefläche eines Lastkraftwagens, auf dem der Behälter transportiert wird. Derartige mechanische Belastungen können beispielsweise durch den Bruchfalltest, wie er im vorliegenden Text beschrieben ist, simuliert werden.

Der Erfindung liegt daher die Aufgabe zugrunde, Behälter aus Polycarbonat bereitzustellen, die bei starker mechanischer Belastung bruchfester sind, als die bekannten Behälter aus Polycarbonat.

Die erfindungsgemäße Aufgabe wird gelöst durch Behälter aus verzweigtem Polycarbonat, dadurch gekennzeichnet, daß das Polycarbonat bei 260°C und einer Scherrate von 10 s⁻¹ eine Schmelzeviskosität von 6000 bis 8000 Pas und bevorzugt von 6500 bis 8000 Pas und bei 260°C und einer Scherrate von 1000 s⁻¹ eine Schmelzeviskosität von 880 bis 1500 Pas, vorzugsweise von 900 bis 1500 Pas und besonders bevorzugt von 950 bis 1200 Pas hat und daß es einen MFR (Melt flow index, gemessen nach ISO1133) von 0,1 bis 3,0 g/10min, vorzugsweise von 0,5 bis 2,8 g/10min und besonders bevorzugt von 0,5 bis 2,5 g/10min hat.

Bevorzugt sind die Behälter aus verzweigtem Polycarbonat, dadurch gekennzeichnet, daß bei der Herstellung des verzweigten Polycarbonates Phenol und/oder Alkylphenole und/oder Arylphenole eingesetzt werden, besonders bevorzugt sind Alkylphenole und/oder Arylphenole und ganz besonders bevorzugt sind Alkylphenole.

Weiterhin bevorzugt sind die Behälter aus verzweigtem Polycarbonat, dadurch gekennzeichnet, daß bei der Herstellung des verzweigten Polycarbonates Phenol eingesetzt wird und das verzweigte Polycarbonat als Verzweiger 1,1,1-Tris-(4-hydroxyphenyl)-ethan (THPE) und/oder 3,3-Bis-(3-methyl-4-hydroxyphenyl)-2-oxo-2,3-dihydroindol (IBK, Isatinbiskresol) enthält.

Weiterhin bevorzugt sind Behälter aus verzweigtem Polycarbonat, dadurch gekennzeichnet, daß das Polycarbonat eine Verzweigungszahl bei 260°C, definiert als Quotienten der Schmelzeviskosität bei einer Scherrate von 10⁻¹ und 1000 s⁻¹ von 6 bis 12, vorzugsweise 7 bis 12 und besonders bevorzugt von 7 bis 10 hat. Die Verzweigungszahl wird abgekürzt SV-Zahl genannt.

Weiterhin bevozugt sind die Behälter aus verzweigtem Polycarbonat, dadurch gekennzeichnet, daß bei der Herstellung des verzweigten Polycarbonates Alkylphenole und/oder Arylphenole, besonders bevorzugt sind Alkyphenole, eingesetzt werden und daß das verzweigte Polycarbonat als Verzweiger 1,1,1-Tris-(4-hydroxyphenyl)-ethan (THPE) und/oder 3,3-Bis-(3-methyl-4-hydroxyphenyl)-2-oxo-2,3-dihydroindol (IBK, Isatinbiskresol) enthält.

Besonders bevorzugt sind Behälter aus verzweigtem Polycarbonat, dadurch gekennzeichnet, daß bei der Herstellung des verzweigten Polycarbonates als Arylphenol p-tert-Cumylphenol eingesetzt wird.

Weiterhin besonders bevorzugt sind Behälter aus verzweigtem Polycarbonat, dadurch gekennzeichnet, daß bei der Herstellung des verzweigten Polycarbonates als Alkylphenole p-tert-Butylphenol oder Isooctylphenol eingesetzt wird.

Diese Behälter sind somit Gegenstand der vorliegenden Erfindung.

Ein weiterer Gegenstand der vorliegenden Erfindung ist die Herstellung der erfindungsgemäßen Behälter.

Ein weiterer Gegenstand der vorliegenden Erfindung ist die Verwendung der erfindungsgemäßen Behälter.

Ein weiterer Gegenstand der vorliegenden Erfindung sind die verzweigten Polycarbonate, aus denen die Behälter bestehen und die die oben aufgeführten Merkmale haben.

Die erfindungsgemäßen Behälter weisen zahlreiche Vorteile auf. Sie sind widerstandsfähig gegen mechanische Belastungen, d.h. bruchfest und haben darüber hinaus ein vorteilhaftes Spektrum weiterer mechanischer Eigenschaften. Sie haben gute optische Eigenschaften, insbesondere weisen sie hohe Transparenz auf. Sie haben eine hohe Wärmeformbeständigkeit. Aufgrund der hohen Wärmeformbeständigkeit können die erfindungsgemäßen Behälter mit heißem Wasser gereinigt werden oder mit Heißdampf sterilisiert werden. Sie haben eine hohe Resistenz gegen die üblichen Reinigungsmittel, die beispielsweise zur Reinigung von Wasserflaschen für den Mehrwegeinsatz, ein Anwendungsfeld der erfindungsgemäßen Behälter, eingesetzt werden. Sie sind durch bekannte Verfahren leicht und kostengünstig herstellbar. Hierbei kommen die guten Verarbeitungseigenschaften des Polycarbonates vorteilhaft zum Ausdruck. Sie weisen eine geringe Alterung des Materials im Gebrauch und damit lange Gebrauchsdauer auf. Für einen üblicherweise auftretenden Mehrweg-einsatz bedeutet dies viele Nutzungszyklen.

Erfindungsgemäß geeignete verzweigte Polycarbonate sind sowohl verzweigte Homopolycarbonate, als auch verzweigte Copolycarbonate. Auch eine Mischung der erfindungsgemäß geeigneten verzweigten Polycarbonate kann verwendet werden.

Der Zusatz von nicht verzweigten Polycarbonaten zu den verzweigten Polycarbonaten ist in geringem Umfang möglich, soweit dadurch die wesentlichen Eigenschaften, insbesondere die hohe Bruchfestigkeit der aus den Polycarbonaten hergestellten Behälter, nicht beeinträchtigt werden.

Bevorzugte verzweigte Polycarbonate sind solche verzweigte Homopolycarbonate und verzweigte Copolycarbonate auf Basis der Bisphenole der allgemeinen Formel (I).

HO-Z-O (I)

worin
- Z: ein divalenter organischen Rest mit 6 bis 30 C-Atomen ist, der eine oder mehrere aromatische Gruppen enthält.

Beispiele für Bisphenole gemäß der allgemeinen Formel (I) sind Bisphenole, die zu den folgenden Gruppen gehören:
Dihydroxydiphenyle,
Bis-(hydroxyphenyl)-alkane,
Bis-(hydroxyphenyl)-cycloalkane,
Indanbisphenole,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide und
α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen:
Hydrochinon,
Resorcin,
4,4'-Dihydroxydiphenyl,
Bis-(4-hydroxyphenyl)sulfid,
Bis-(4-hydroxyphenyl)sulfon,
Bis-(3,5-dimethyl-4-hydroxyphenyl)-methan,
Bis-(3,5-dimethyl-4-hydroxyphenyl)-sulfon,
1,1-Bis-(3,5-dimethyl-4-hydroxyphenyl)-p/m-diisopropylbenzol,
1,1-Bis-(4-hydroxyphenyl)-1-phenyl-ethan,
1,1-Bis-(3,5-dimethyl-4-hydroxyphenyl)-cyclohexan,
1,1-Bis-(4-hydroxyphenyl)-3-methyleyclohexan,
1,1-Bis-(4-hydroxyphenyl)-3,3-dimethylcyclohexan,
1,1-Bis-(4-hydroxyphenyl)-4-methylcyclohexan.
1,1-Bis-(4-hydroxyphenyl)-cyclohexan,
1,1-Bis-(4-hydroxyphenyl)-3,3,5-trimethylcyclohexan,
2,2-Bis-(3,5-dichlor-4-hydroxyphenyl)-propan,
2,2-Bis-(3-methyl-4-hydroxyphenyl)-propan,
2,2-Bis-(3,5-dimethyl-4-hydroxyphenyl)-propan,
2,2-Bis-(4-hydroxyphenyl)-propan (d.h. Bisphenol A),
2,2-Bis-(3-chlor-4-hydroxyphenyl)-propan,
2,2-Bis-(3,5-dibrom-4-hydroxyphenyl)-propan,
2,4-Bis-(4-hydroxyphenyl)-2-methylbutan,
2,4-Bis-(3,5-dimethyl-4-hydroxyphenyl)-2-methylbutan,
α,α'-Bis-(4-hydroxyphenyl)-o-diisopropylbenzol,
α,α'-Bis-(4-hydroxyphenyl)-m-diisopropylbenzol (d. h. Bisphenol M),
α,α'-Bis-(4-hydroxyphenyl)-p-diisopropylbenzol und
Indanbisphenol.

Besonders bevorzugte verzweigte Polycarbonate sind das verzweigte Homopolycarbonat auf Basis von Bisphenol A, das verzweigte Homopolycarbonat auf Basis von 1,1-Bis-(4-hydroxyphenyl)-3,3,5-trimethylcyclohexan und die verzweigten Copolycarbonate auf Basis der beiden Monomere Bisphenol A und 1,1-Bis-(4-hydroxyphenyl)-3,3,5-trimethylcyclohexan.

Ganz besonders bevorzugt ist das verzweigte Homopolycarbonat auf Basis von Bisphenol A.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physis of Polycarbonates", Polymer Reviews, Band 9, S. 77-98, Interscience Publishers, New York, London, Sidney, 1964 und in US-A 3 028 635, in US-A 3 062 781, in US-A 2 999 835, in USA 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummem 62039/1986, 62040/1986 und 105550/1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Die Herstellung der erfindungsgemäß zu verwendenden verzweigten Polycarbonate erfolgt in bekannter Weise aus Bisphenolen, Kohlensäurederivaten, Verzweigen, Alkylphenolen und/oder Arylphenolen sowie gegebenenfalls weiteren Substanzen, die als Kettenabbrecher wirken können.

Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Joumal of Polymer Science, Polymer Chemistry Edition, Vol. 19, 75-90 (1980).

Das Schmelzeumesterungsverfahren ist insbesondere beschrieben in H. Schnell, "Chemistry and Physis of Polycarbonates", Polymer Reviews, Band 9, S. 44 bis 51, Interscience Publishers, New York, London, Sidney, 1964 sowie in DE-A 1 031 512, in US-A 3 022 272, in US-A 5 340 905 und in US-A 5 399 659.

Die Herstellung der erfindungsgemäß zu verwendenden verzweigten Polycarbonate erfolgt bevorzugt nach dem Phasengrenzflächenverfahren oder dem bekannten Schmelzeumesterungsverfahren. lm ersten Fall dient als Kohlensäurederivat vorzugsweise Phosgen, im letzteren Fall vorzugsweise Diphenylcarbonat.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Bei der Herstellung von Polycarbonaten nach dem Schmelzeumesterungsverfahren kann die Reaktion des Bisphenols und des Kohlensäurediesters kontinuierlich oder diskontinuierlich beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren durchgeführt werden.

Kohlensäurediester, die zur Herstellung von Polycarbonaten eingesetzt werden können, sind zum Beispiel Diarylester der Kohlensäure, wobei die beiden Arylreste bevorzugt jeweils 6 bis 14 C-Atome haben. Vorzugsweise werden die Diester der Kohlensäure auf der Basis von Phenol oder alkylsubstituierten Phenolen, also zum Beispiel Diphenylcarbonat oder Dikresylcarbonat, eingesetzt. Bezogen auf 1 Mol Bisphenol werden die Kohlensäurediester bevorzugt in einer Menge von 1,01 bis 1,30 Mol, besonders bevorzugt in einer Menge von 1,02 bis 1,15 Mol eingesetzt.

Die erfindungsgemäßen verzweigten Polycarbonate haben ein Gewichtsmittel der molaren Masse Mw von bevorzugt von 12 000 bis 120 000 g/mol, besonders bevorzugt von 26 000 bis 50 000 g/mol und insbesondere von 31 000 bis 40 000 g/mol (ermittelt durch Messung der relativen Viskosität bei 25 °C in Methylenchlorid bei einer Konzentration von 0,5 g pro 100 ml Methylenchlorid und Eichung der Viskositätsmessung durch Ultrazentrifugation oder Streulichtmessung).

Die bei der Herstellung der erfindungsgemäßen verzweigten Polycarbonate eingesetzen Phenole, Alkylphenole und/oder Arylphenole haben die Wirkung von Kettenabbrechern, d.h. sie begrenzen die maximal erreichbare mittlere molare Masse. Sie werden entweder zusammen mit den Monomeren, die für die Herstellung des Polycarbonates benötigt werden oder in einer späteren Phase der Polycarbonatsynthese zugesetzt. Sie wirken als monofunktionelle Verbindungen im Sinne der Polycarbonatsynthese und wirken deshalb als Kettenabbrecher.

Die bei der Herstellung des verzweigten Polycarbonates eingesetzen Phenol, Alkylphenole und/oder Arylphenole werden bevorzugt in einer Menge von 0,25 bis 10 Mol-%, bezogen auf die Summe der jeweils eingesetzten Bisphenole, eingesetzt.

Es können auch Mischungen aus Phenol und/oder einem oder mehreren Alkylphenole und/oder Arylphenole eingesetzt werden.

Die bei der Herstellung des verzweigten Polycarbonates eingesetzen Alkylphenole und/oder Arylphenole führen zu Alkylphenylendgruppen bzw. zu Arylphenylendgruppen. Daneben können in dem entstehenden Polycarbonat je nach Herstellverfahren andere Endgruppen auftreten, wie z.B. phenolische OH-Endgruppen oder Chlorkohlensäureesterendgruppen.

Bevorzugt werden ausschließlich Phenol, Alkylphenole und/oder Arylphenole ohne den Zusatz weiterer Substanzen, die als Kettenabbrecher wirken können, eingesetzt.

Besonders bevorzugt werden ausschließlich Alkylphenole und/oder Arylphenole ohne den Zusatz weiterer Substanzen, die als Kettenabbrecher wirken können, eingesetzt.

Ein bevorzugtes Alkylphenol ist beispielsweise para-tert.-Butylphenol (vergl.: Huston, Am Soc. 58, 439; US-A 2 051 300). Para-tert.-Butylphenol ist ein Handelsprodukt und kann beispielsweise von der Hüls AG, Marl, Deutschland oder der PPG Industrie, USA bezogen werden. Ein weiteres bevorzugtes Alkylphenol ist para-Cumylphenol. (vergl.: Welsch, Am. Soc. 60, 58 (1983)). Ein weiteres bevorzugtes Alkylphenol ist Isooctylphenol (vergl.: US-A 2 415 069). Isooctylphenol ist ein Handelsprodukt und kann beispielsweise von der Hüls AG, Marl, Deutschland bezogen werden. Diese Alkylphenole und deren Herstellung sind dem durchschnittlichen Fachmann bekannt. Einen Überblick über die Verwendung und deren Herstellung ist beschrieben in Houben-Weyl "Methoden der organischen Chemie" G. Thieme Verlag 4. Auflage (19976) Band 6/1 c S. 951 ff.

Bei der Herstellung der erfindungsgemäßen verzweigten Polycarbonate können neben den Alkylphenolen und/oder Arylphenolen weitere Substanzen, die als Kettenabbrecher wirken können, eingesetzt werden.

Hierfür geeignete weitere Substanzen, die als Kettenabbrecher wirken können, sind sowohl Monophenole als auch Monocarbonsäuren. Geeignete Monophenole sind z.B. Phenol, p-Chlorphenol oder 2,4,6-Tribromphenol. Geeignete Monocarbonsäuren sind Benzoesäure, Alkylbenzoesäuren und Halogenbenzoesäuren.

Die bevorzugte weitere Substanz, die als Kettenabbrecher wirken kann, ist Phenol.

Die Menge an weitere Substanzen, die als Kettenabbrecher wirken können, beträgt bevorzugt zwischen 0,25 und 10 Mol-%, bezogen auf die Summe der jeweils eingesetzten Bisphenole.

Die erfindungsgemäß geeigneten verzweigten Polycarbonate sind in bekannter Weise verzweigt, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan. Tetra-(4-(4-hydroxyphenyl-isopropyl)-phenoxy)-methan und 1,4-Bis-(4',4"dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α"-Tris-(4-hydroxyphenol)-1,3,5-triisopropylbenzol.

Bevorzugte Verzweiger sind 1,1,1-Tris-(4-hydroxyphenyl)-ethan (THPE) und 3,3-Bis-(3-methyl-4-hydroxyphenyl)-2-oxo-2,3-dihydroindol (IBK, lsatinbiskresol).

Die Menge der gegebenenfalls einzusetzenden Verzweiger beträgt bevorzugt 0,05 Mol-% bis 2 Mol-%, vorzugsweise 0,1 Mol-% bis 0,8 Mol-% und ganz besonders bevorzugt 0,25 Mol-% bis 0,6 Mol-% bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wäßrig alkalischen Phase vorgelegt werden, oder in einem organischen Lösungsmittel gelöst zusammen mit den Kohlensäurederivaten zugegeben werden. lm Falle des Umesterungsverfahrens werden die Verzweiger bevorzugt zusammen mit den Dihydroxyaromaten oder Bisphenolen dosiert.

Zur Modifizierung der Eigenschaften können den erfindungsgemäßen verzweigten Polycarbonaten übliche Additive zugemischt und/oder auf die Oberfläche aufgebracht werden. Übliche Additive sind zum Beispiel: Füllstoffe (z.B. mineralische Füllstoffe), Verstärkungsstoffe (z.B. Glasfasern), Stabilisatoren (z.B. UV-Stabilisatoren, Thermostabilisatoren, Gammastrahlenstabilisatoren), Antistatika, Fließhilfsmittel, Entformungsmittel, Brandschutzmittel, Farbstoffe und Pigmente, sofern diese die guten mechanischen Eigenschaften der Formmassen nicht beeinträchtigen. Die genannten und weitere geeignete Additive sind zum Beispiel beschrieben in Gächter, Müller, Kunststoff-Additive, 3. Ausgabe, Hanser-Verlag, München, Wien, 1989.

Den erfindungsgemäßen verzweigten Polycarbonaten können andere Polymere zugemischt werden, wodurch sogenannte Polymerblends erhalten werden, soweit dadurch die wesentlichen Eigenschaften, insbesondere die hohe Bruchfestigkeit der aus den Polycarbonaten hergestellten Behälter, nicht beeinträchtigt werden. Beispielsweise können Blends aus den erfindungsgemäßen Polycarbonaten ABS-Polymeren oder aus den erfindungsgemäßen Polycarbonaten und Polyestern, wie z.B. Polyethylenterephthalat oder Polybutylenterephthalat, hergestellt werden.

Behälter im Sinne der vorliegenden Erfindung können zur Verpackung, zur Lagerung oder zum Transport von Flüssigkeiten, von Feststoffen oder von Gasen verwendet werden. Bevorzugt sind Behälter zur Verpackung, zur Lagerung oder zum Transport von Flüssigkeiten (Flüssigkeitsbehälter), besonders bevorzugt sind Behälter zur Verpackung, zur Lagerung oder zum Transport von Wasser (Wasserflaschen).

Behälter im Sinne der Erfindung sind Hohlkörper mit einem Volumen von bevorzugt 0.1 l bis 50 l, vorzugsweise 0,5 l bis 50 l, ganz besonders bevorzugt sind Volumina von 1 l, 51, 12l, und 20 l.

Ganz besonders bevorzugt sind Wasserflaschen mit einem Volumen von 3 bis 5 Gallonen.

Die Behälter haben ein Leergewicht von bevorzugt 0,1 g bis 3000 g, vorzugsweise 50 g bis 2000 g und besonders bevorzugt von 650 g bis 900 g.

Die Wanddicken der Behälter betragen bevorzugt 0,5 mm bis 5 mm, vorzugsweise 0,8 mm bis 4 mm.

Behälter im Sinne der vorliegenden Erfindung haben eine Länge von bevorzugt 5 mm bis 2000 mm, besonders bevorzugt 100 mm bis 1000 mm.

Die Behälter haben einen Maximalumfang von bevorzugt 10 mm bis 250 mm, vorzugsweise von 50 mm bis 150 mm und ganz besonders bevorzugt von 70 bis 90 mm.

Behälter im Sinne der Erfindung haben bevorzugt einen Flaschenhals einer Länge von bevorzugt 1 mm bis 500 mm, vorzugsweise von 10 mm bis 250 mm, besonders bevorzugt von 50 mm bis 100 mm und ganz besonders bevorzugt von 70 bis 80 mm.

Die Wanddicke des Flaschenhalses der Behälter variiert zwischen bevorzugt 0,5 mm bis 10 mm, besonders bevorzugt von 1 mm bis 10 mm und ganz besonders bevorzugt von 5 mm bis 7 mm.

Der Durchmesser des Flaschenhalses variiert zwischen bevorzugt 5 mm und 200 mm. Besonders bevorzugt sind 10 mm bis 100 mm und ganz besonders bevorzugt sind 45 mm bis 75 mm.

Der Flaschenboden der erfindungsgemäßen Behälter hat einen Durchmesser von bevorzugt 10 mm bis 250 mm, vorzugsweise 50 mm bis 150 mm, und ganz besonders bevorzugt 70 bis 90 mm.

Behälter im Sinne der vorliegenden Erfindung können jede beliebige geometrische Form haben, sie können z.B. rund, oval oder mehreckig oder kantige mit zum Beispiel 3 bis 12 Seiten sein. Bevorzugt sind runde, ovale und hexagonale Formen.

Das Design der Behälter kann auf jeder beliebigen Oberflächenstruktur basieren. Die Oberflächenstrukturen sind vorzugsweise glatt oder verrippt. Die erfindungsgemäßen Behälter können auch mehrere verschiedenen Oberflächenstrukturen aufweisen. Rippen oder Sicken können um den Umfang der Behälter laufen. Sie können einen beliebigen Abstand haben oder mehrere voneinander verschiedene beliebige Abstände. Die Oberflächenstrukturen der erfindungsgemäßen Behälter können aufgerauhte oder integrierte Strukturen, Symbole, Ornamente, Wappen, Firmenzeichen, Warenzeichen, Namenszüge, Herstellerangaben, Werkstoffkennzeichnungen und oder Volumenangaben aufweisen.

Die erfindungsgemäßen Behälter können eine beliebige Anzahl von Griffen aufweisen, die sich seitlich, oben oder unten befinden können. Die Griffe können außenstehend und oder integriert in die Behälterkontur sein. Die Griffe können klappbar oder feststehend sein. Die Griffe können jede beliebige Kontur aufweisen, z.B. oval, rund oder mehreckig. Die Griffe weisen bevorzugt eine Länge von 0,1 mm bis 180 mm, vorzugsweise von 20 mm bis 120 mm auf.

Die erfindungsgemäßen Behälter können außer dem erfindungsgemäßen Polycarbonat noch in geringerem Ausmaß andere Substanzen enthalten, z. B. Dichtungen aus Kautschuk oder Griffe aus anderen Materialien.

Die Herstellung der erfindungsgemäßen Behälter erfolgt bevorzugt nach dem Extrusionsblasverfahren oder nach dem Spritzblasverfahren.

In einer bevorzugten Ausführungsform des zur Herstellung der erfindungsgemäßen Behälter werden die erfindungsgemäßen Polycarbonate auf Extrudern mit einer glatten oder genuteten, bevorzugt einer glatten Einzugszone verarbeitet.

Die Antriebsleistung des Extruders wird dem Schneckendurchmesser entsprechend gewählt. Beispielhaft sei genannt, daß bei einem Schneckendurchmesser von 60 mm die Antriebsleistung des Extruders ca. 30 bis 40 kW, bei einem Schneckendurchmesser von 90 mm ca. 60 bis 70 kW beträgt.

Geeignet sind die in der Verarbeitung von technischen Thermoplasten üblichen Universal-Drei-Zonen-Schnecken.

Für die Herstellung von Behältern des Volumens 11 wird ein Schneckendurchmesser von 50 bis 60 mm bevorzugt. Für die Herstellung von Behältern des Volumens 20 1 wird ein Schneckendurchmesser von 70 bis 100 mm bevorzugt. Die Länge der Schnecken beträgt bevorzugt das 20- bis 25-fache des Durchmessers der Schnecke.

Im Falle des Blasformverfahrens wird das Blasformwerkzeug bevorzugt auf 50 bis 90°C temperiert, um eine brillante und qualitativ hochwertige Oberfläche der Behälter zu erhalten.

Um eine gleichmäßige und effektive Temperierung des Blasformwerkzeugs zu gewährleisten, sind der Bodenbereich und der Mantelbereich separat voneinander temperierbar.

Das Blasformwerkzeug wird bevorzugt mit einer Quetschkraft von 1000 bis 1500 N je cm Quetschnahtlänge geschlossen.

Vor der Verarbeitung wird das erfindungsgemäße Polycarbonat bevorzugt getrocknet, damit die optische Qualität der Behälter nicht durch Schlieren oder Bläschen beeinträchtigt wird und das Polycarbonat bei der Verarbeitung nicht hydrolytisch abgebaut wird. Der Restfeuchtegehalte nach Trocknung beträgt bevorzugt weniger als 0,01 Gew.-%. Bevorzugt wird eine Trocknungstemperatur von 120°C. Niedrigere Temperaturen gewährleisten keine ausreichende Trocknung, bei höheren Temperaturen besteht die Gefahr, daß die Granulatkörner des Polycarbonates zusammenkleben und dann nicht mehr verarbeitbar sind. Trockenluft-Trockner werden bevorzugt.

Die bevorzugte Schmelzetemperatur bei der Verarbeitung des erfindungsgemäßen Polycarbonates ist 230° bis 300°C.

Die erfindungsgemäßen Behälter können zur Verpackung, zur Lagerung oder zum Transport von Flüssigkeiten, von Feststoffen oder von Gasen verwendet werden. Bevorzugt ist die Ausführungsform als Behälter, die beispielsweise zur Verpackung, zur Lagerung oder zum Transport von Flüssigkeiten verwendet werden. Besonders bevorzugt ist die Ausführungsform als Wasserflasche, die beispielsweise zur Verpackung, zur Lagerung oder zum Transport von Wasser verwendet werden kann.

Eine bevorzugte Ausführungsform der Erfindung ist diejenige, bei der die Behälter aus verzweigtem Polycarbonat dadurch gekennzeichnet ist, daß das verzweigte Polycarbonat als Verzweiger THPE und/oder IBK enthält und bei der bei der Herstellung des verzweigten Polycarbonates Alkylphenole eingesetzt werden und bei der der Behälter eine Wasserflasche ist.

Eine besonders bevorzugte Ausführungsform der Erfindung ist diejenige, bei der der Behälter aus verzweigtem Polycarbonat dadurch gekennzeichnet ist, daß das verzweigte Polycarbonat als Verzweiger THPE und/oder IBK enthält und bei der zur Herstellung des verzweigten Polycarbonates Phenol eingesetzt wird und bei der das Polycarbonat bei 260°C und einer Scherrate von 10 s⁻¹ eine Schmelzeviskosität von 6000 bis 7000 Pas und bei 260°C und einer Scherrate von 1000 s⁻¹ eine Schmelzeviskosität von 900 bis 1100 Pas hat und einen MFR (Melt flow index, gemessen nach ISO1133) von < 3,5 g/10 min hat und bei der der Behälter eine Wasserflasche ist.

Eine besonders bevorzugte Ausführungsform der Erfindung ist weiterhin diejenige, bei der der Behälter aus verzweigtem Polycarbonat dadurch gekennzeichnet ist, daß das verzweigte Polycarbonat als Verzweiger 1,1,1-Tris-(4-hydroxyphenyl)-ethan (THPE) und/oder 3,3-Bis-(3-methyl-4-hydroxyphenyl)-2-oxo-2,3-dihydroindol (IBK, Isatinbiskresol) enthält und bei der bei der Herstellung des verzweigten Polycarbonates para-tert.-Butylphenol und/oder para-Cumylphenol und/oder para-Isooctylphenol eingesetzt werden und bei der der Behälter eine Wasserflasche ist.

Unter der zuletzt genannten Ausführungsform ist diejenige besonders bevorzugt, bei der das verzweigte Polycarbonat als Verzweiger ausschließlich 1,1,1-Tris-(4-hydroxyphenyl)-ethan (THPE) und/oder 3,3-Bis-(3-methyl-4-hydroxyphenyl)-2-oxo-2,3-dihydroindol (IBK, Isatinbiskresol) enthält und bei der bei der Herstellung des verzweigten Polycarbonates para-tert.-Butylphenol und/oder para-Cumylphenol und/oder para-Isooctylphenol eingesetzt werden.

Unter der zuletzt genannten Ausführungsform ist diejenige besonders bevorzugt. bei der das verzweigte Polycarbonat als Verzweiger ausschließlich 1,1,1-Tris-(4-hydroxyphenyl)-ethan (THPE) und/oder 3,3-Bis-(3-methyl-4-hydroxyphenyl)-2-oxo-2,3-dihydroindol (IBK, Isatinbiskresol) enthält und bei der bei der Herstellung des verzweigten Polycarbonates para-Isooctylphenol eingesetzt wird.

Die Beurteilung der Bruchfestigkeit der Behälter erfolgt bevorzugt nach dem Bruchfalltest wie er im folgenden beschrieben ist.

Die Vorbereitung der eigentlichen Messung erfolgt in der Weise, daß vor der Messung die Form und die Masse der Behälter bestimmt werden. Im Test werden nur Behälter gleicher Form und gleicher Masse verglichen. Die Masse der im Bruchfalltest verglichenen Behälter darf um maximal 5 Prozent verschieden sein.

Der Behälter wird bei Raumtemperatur mit destilliertem Wasser gefüllt und anschließend auf einer Falltürtribüne plaziert, deren Boden als Falltür ausgeführt ist. Die Falltürtribüne wird bei der ersten Messung soweit angehoben, daß ihr Boden um 0,5 Meter über dem darunterliegenden Boden, der aus einer dicken Stahlplatte besteht, liegt. Anschließend wird die Falltür geöffnet, so daß der mit Wasser gefüllte Behälter auf den Boden fällt. Ist der Behälter nicht zerbrochen wird derselbe Behälter erneut auf die Falltürtribüne gestellt und in einer zweiten Messung auf eine Höhe von 1 Meter angehoben, um in beschriebener Weise den Behälter erneut fallen zu lassen. Weitere Messungen folgen, wobei die Fallhöhe jeweils um 0,5 Meter gesteigert wird. Auf diese Weise wird eine Bruchfallhöhe ermittelt, die dadurch definiert ist, daß der Hohlkörper zerbricht und das Wasser ausläuft. Als Maß für die mechanischen Festigkeit der Behälter dient eine mittlere Bruchfallhöhe, ein Mittelwert aus zehn Fallversuchen.

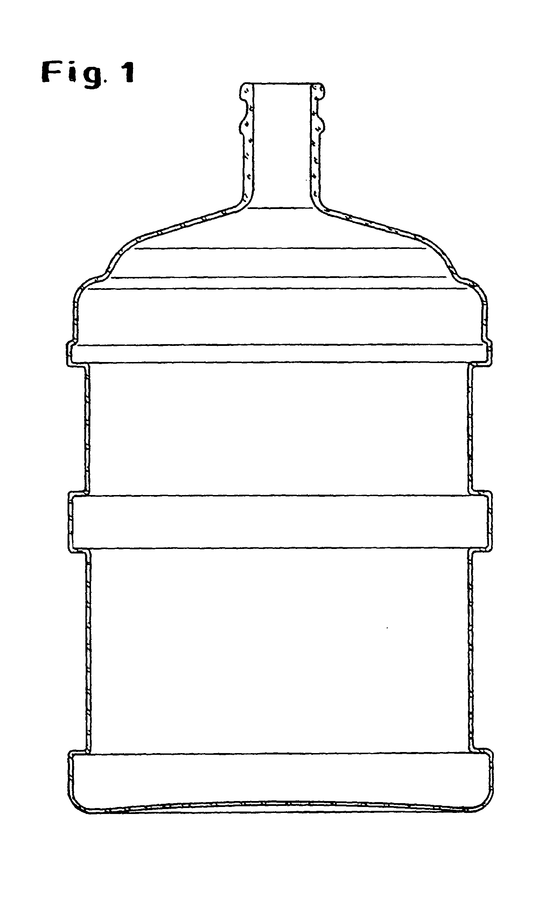

Der erfindungsgemäße Behälter wird im folgenden anhand einer lediglich als ein bevorzugtes Beispiel darstellenden Zeichnung (Fig. 1) näher erläutert.

Fig. 1 stellt einen Querschnitt durch einen rotationssymmetrischen Behälter (eine Wasserflasche) dar. Dieser hat ein Gewicht von 780g ± 15 g eine Höhe von ca. 485 mm und einen Hals - Durchmesser von ca. 54,8 mm, Umfang ca. 855 mm. Er besteht aus verzweigtem Polycarbonat. Der Behälter faßt ein Volumen von 18,9 l (5 Gallon).

Die Erfindung wird nachfolgend anhand von Beispielen näher erläutert.

Nach dem Extrusionsblasform-Verfahren wurde ein erfindungsgemäßer Behälter mit einer Maschine von Krupp-Kautex Maschinenbau GmbH, Bonn, Deutschland (Extruder: Schneckendurchmesser: 90 mm, wirksame Schneckenlänge: 22D, Kopf: 3,51 Fifo, Schließkraft: 300 kN, Zykluszeit: 31s bis 32 s, Ausstoßzeit: 5,3 s bis 5,6 s) bei einer Massetemperatur von 260°C und einer Temperatur des Blasformwerkzeug von ca. 90°C gemäß Fig. 1 aus den verzweigten Bisphenol-A-Polycarbonaten (Beispiele 1 bis 7, Tabelle 1 und Vergleichsbeispiele 1 bis 5, Tabelle 2) hergestellt. Diese Bisphenol-A-Polycarbonate wurden nach dem Phasengrenzflächenverfahren hergestellt. Die verwendeten Kettenabbrecher und Verzweiger sind in Tabelle 1 und 2 dargestellt. Der Verzweigergehalt lag bei allen Beispielen und Vergleichsbeispiele bei 0,30 mol %. In den gleichen Tabellen sind die dazugehörigen MFR-Werte, die Schmelzeviskosität bei den Scherraten von 10 s⁻¹ und 1000 s⁻¹ bei einer Temperatur von 260°C und die SV-Zahl (= Verzweigungszahl) angegeben.

Der erfindungsgemäßer Behälter wurde dem im vorliegenden Text beschriebenen Bruchfalltest unterzogen.

Es wurden pro Behälter 10 Test durchgeführt und aus den zehn Messungen eine mittlere Bruchfallhöhe ermittelt, die dem Durchschnittswert aus zehn Werten entspricht.

Der in den Versuchen verwendete Behälter hatte die in Fig. 1 dargestellte Gestalt.

**Tabelle 1**

| Beispiel | Kettenabbrecher | Verzweiger | MFR | Scherraten bei 260°C | | SV-Zahl |
|---|---|---|---|---|---|---|
| | | | | 10 s⁻¹ | 1000s⁻¹ | |
| 1 | Phenol | IBK | 2,5 | 6653 | 953 | 7,0 |
| 2 | Phenol | THPE | 2,7 | 6414 | 954 | 6,7 |
| 3 | p-tert.-Butylphenol | IBK | 2,8 | 6616 | 976 | 6,6 |
| 4 | p-tert.-Butylphenol | THPE | 2,7 | 6390 | 996 | 6,4 |
| 5 | p-Cumylphenol | IBK | 2,0 | 7212 | 980 | 7,4 |
| 6 | p-Cumylphenol | THPE | 2,3 | 6862 | 1041 | 6,6 |
| 7 | Isooctylphenol | IBK | 2,2 | 6905 | 968 | 7,1 |

**Tabelle 2**

| Vergleichsbeispiel | Kettenabbrecher | Verzweiger | MFR | Scherraten bei 260°C | | SV-Zahl |
|---|---|---|---|---|---|---|
| | | | | 10 s-1 | 1000s-1 | |
| 1 | Phenol | IBK | 3,2 | 5220 | 870 | 6,0 |
| 2 | Phenol | THPE | 3,5 | 4912 | 847 | 5,8 |
| 3 | p-tert.-Butylphenol | IBK | 3,7 | 4876 | 855 | 5,7 |
| 4 | p-tert.-Butylphenol | THPE | 3,4 | 4998 | 841 | 5,9 |
| 5 | p-Cumylphenol | THPE | 3,7 | 4896 | 874 | 5,6 |

Ergebnisse der Bruchfalltests:

**Tabelle 3**

| Beispiel | mittlere Bruchfallhöhe in m |
|---|---|
| 1 | 2,8 |
| 2 | 2,9 |
| 3 | 3,2 |
| 4 | 3,3 |
| 5 | 3,8 |
| 6 | 3,6 |
| 7 | 3,6 |

**Tabelle 4**

| Vergleichsbeispiel | mittlere Bruchfallhöhe in m |
|---|---|
| 1 | 1,5 |
| 2 | 1,7 |
| 3 | 2,1 |
| 4 | 2,3 |
| 5 | 2,2 |

Die Beispiele zeigen die überlegene Bruchfestigkeit der erfindungsgemäßen Behälter.

## Patentansprüche

1. Behälter aus verzweigtem Polycarbonat, **dadurch gekennzeichnet, daß** das Polycarbonat bei 260°C und einer Scherrate von 10 s⁻¹ eine Schmelzeviskosität von 6500 bis 8000 Pas und bei 260°C und einer Scherrate von 1000 s⁻¹ eine Schmelzeviskosität von 880 bis 1500 Pas hat und daß es einen MFR (Melt flow index) von 0,1 bis 3,0 g/10min hat.

2. Behälter aus verzweigtem Polycarbonat gemäß Anspruch 1, **dadurch gekennzeichnet, daß** bei der Herstellung des verzweigten Polycarbonates Phenol und/oder Alkylphenole und/oder Arylphenole eingesetzt werden.

3. Behälter aus verzweigtem Polycarbonat gemäß Anspruch 1, **dadurch gekennzeichnet, daß** bei der Herstellung des verzweigten Polycarbonates Phenol eingesetzt wird und daß das verzweigte Polycarbonat als Verzweiger 1,1,1-Tris-(4-hydroxyphenyl)-ethan (THPE) und/oder 3,3-Bis-(3-methyl-4-hydroxyphenyl)-2-oxo-2,3-dihydroindol (IBK, Isatinbiskresol) enthält.

4. Behälter aus verzweigtem Polycarbonat gemäß Anspruch 1, **dadurch gekennzeichnet, daß** bei der Herstellung des verzweigten Polycarbonates Alkylphenole und/oder Arylphenole eingesetzt werden und daß das verzweigte Polycarbonat als Verzweiger 1,1,1-Tris-(4-hydroxyphenyl)-ethan (THPE) und/oder 3,3-Bis-(3-methyl-4-hydroxyphenyl)-2-oxo-2,3-dihydroindel (IBK, Isatinbiskresol) enthält.

5. Behälter aus verzweigtem Polycarbonat gemäß Anspruch 4, **dadurch gekennzeichnet, daß** bei der Herstellung des verzweigten Polycarbonates als Arylphenol p-tert-Cumylphenol eingesetzt wird.

6. Behälter aus verzweigtem Polycarbonat gemäß Anspruch 4, **dadurch gekennzeichnet, daß** bei der Herstellung des verzweigten Polycarbonates als Alkylphenol p-tert-Butylphenol oder Isooctylphenol eingesetzt wird.

7. Behälter aus verzweigtem Polycarbonat gemäß einem der Ansprüche 1 bis 6, dadurch gekannzeichnet, daß das verzweigte Polycarbonat ein verzweigtes Homopolycarbonat auf Basis von Bisphenol A ist.

8. Behälter gemäß einem der Ansprüche 1 bis 7, **dadurch gekennzeichnet, daß** der Behälter ein Flüssigkeitsbehälter ist.

9. Behälter gemäß einem der Ansprüche 1 bis 7, **dadurch gekennzeichnet, daß** der Behälter eine Wasserflasche ist.

10. Herstellung von Behältern gemäß einem der Ansprüche 1 bis 9 nach dem Spritzblasverfahren.

11. Herstellung von Behältern gemäß einem der Ansprüche 1 bis 9 nach dem Extrusionsblasverfahren.

12. Verwendung von Behältern gemäß einem der Ansprüche 1 bis 9 zur Verpackung, zur Lagerung oder zum Transport von Flüssigkeiten, von Feststoffen oder von Gasen.

13. Verzweigtes Polycarbonat, **dadurch gekennzeichnet, daß** das Polycarbonat bei 260°C und einer Scherrate von 10 s⁻¹ eine Schmelzeviskosität von 6500 bis 8000 Pas und bei 260°C und einer Scherrate von 1000 s⁻¹ eine Schmelzeviskosität von 880 bis 1500 Pas hat und daß es einen MFR (Melt flow index) von 0,1 bis 3,0 g/10min hat.

14. Verzweigtes Polycarbonat gemäß Anspruch 13, **dadurch gekennzeichnet, daß** bei der Herstellung des verzweigten Polycarbonates Phenol und/oder Alkylphenole und/oder Arylphenole eingesetzt werden

15. Verzweigtes Polycarbonat gemäß Anspruch 13, **dadurch gekennzeichnet, daß** bei der Herstellung des verzweigten Polycarbonates Phenol eingesetzt wird und daß das verzweigte Polycarbonat als Verzweiger 1,1,1-Tris-(4-hydroxyphenyl)-ethan (THPE) und/oder 3,3-Bis-(3-methyl-4-hydroxyphenyl)-2-oxo-2,3-dihydroindol (IBK, Isatinbiskresol) enthält.

16. Verzweigtes Polycarbonat gemäß Anspruch 13, **dadurch gekennzeichnet, daß** bei der Herstellung des verzweigten Polycarbonates Alkylphenole und/oder Arylphenole eingesetzt werden und daß das verzweigte Polycarbonat als Verzweiger 1,1,1-Tris-(4-hydroxyphenyl)-ethan (THPE) und/oder 3,3-Bis-(3-methyl-4-hydroxyphenyl)-2-oxo-2,3-dihydroindol (IBK, Isatinbiskresol) enthält.

## Claims

1. Container of branched polycarbonate, **characterised in that**, at 260°C and a shear rate of 10 s⁻¹, the polycarbonate has a melt viscosity of 6500 to 8000 Pas and, at 260°C and a shear rate of 1000 s⁻¹, a melt viscosity of 880 to 1500 Pas, and that it has an MFR (melt flow index) of 0.1 to 3.0 g/10 min.

2. Container of branched polycarbonate according to claim 1, **characterised in that** phenol and/or alkylphenols and/or arylphenols are used in the production of the branched polycarbonate.

3. Container of branched polycarbonate according to claim 1, **characterised in that** phenol is used in the production of the branched polycarbonate and that the branched polycarbonate contains 1,1,1-tris(4-hydroxyphenyl)ethane (THPE) and/or 3,3-bis(3-methyl-4-hydroxyphenyl)-2-oxo-2,3-dihydroindole (IBK, isatin biscresol) as branching agent.

4. Container of branched polycarbonate according to claim 1, **characterised in that** alkylphenols and/or arylphenols are used in the production of the branched polycarbonate, and that the branched polycarbonate contains 1,1,1-tris(4-hydroxyphenyl)ethane (THPE) and/or 3,3-bis(3-methyl-4-hydroxyphenyl)-2-oxo-2,3-dihydroindole (IBK, isatin biscresol) as branching agent.

5. Container of branched polycarbonate according to claim 4, **characterised in that** p-tert.-cumylphenol is used as the arylphenol in the production of the branched polycarbonate.

6. Container of branched polycarbonate according to claim 4, **characterised in that** p-tert.-butylphenol or isooctylphenol is used as the alkylphenol in the production of the branched polycarbonate.

7. Container of branched polycarbonate according to any one of claims 1 to 6, **characterised in that** the branched polycarbonate is a branched homopolycarbonate based on bisphenol A.

8. Container according to any one of claims 1 to 7, **characterised in that** the container is a liquid container.

9. Container according to any one of claims 1 to 7, **characterised in that** the container is a water bottle.

10. Production of containers according to any one of claims 1 to 9 using the injection blow moulding process.

11. Production of containers according to any one of claims 1 to 9 using the extrusion blow moulding process.

12. Use of containers according to any one of claims 1 to 9 for the packaging, storage or transport of liquids, solids or gases.

13. Branched polycarbonate, **characterised in that**, at 260°C and a shear rate of 10 s⁻¹, the polycarbonate has a melt viscosity of 6500 to 8000 Pas and, at 260°C and a shear rate of 1000 s⁻¹, a melt viscosity of 880 to 1500 Pas, and that it has an MFR (melt flow index) of 0.1 to 3.0 g/10 min.

14. Branched polycarbonate according to claim 13, **characterised in that** phenol and/or alkylphenols and/or arylphenols are used in the production of the branched polycarbonate.

15. Branched polycarbonate according to claim 13, **characterised in that** phenol is used in the production of the branched polycarbonate and that the branched polycarbonate contains 1,1,1-tris(4-hydroxyphenyl)ethane (THPE) and/or 3,3-bis(3-methyl-4-hydroxyphenyl)-2-oxo-2,3-dihydroindole (IBK, isatin biscresol) as branching agent.

16. Branched polycarbonate according to claim 13, **characterised in that** alkylphenols and/or arylphenols are used in the production of the branched polycarbonate, and that the branched polycarbonate contains 1,1,1-tris(4-hydroxyphenyl)ethane (THPE) and/or 3,3-bis(3-methyl-4-hydroxyphenyl)-2-oxo-2,3-dihydroindole (IBK, isatin biscresol) as branching agent.

## Revendications

1. Récipient en polycarbonate ramifié, **caractérisé en ce que** le polycarbonate a, à 260°C sous un cisaillement de 10 s⁻¹, une viscosité à l'état fondu de 6500 à 8000 Pas et à 260°C sous un cisaillement de 1000 s⁻¹ une viscosité à l'état fondu de 880 à 1500 Pas, ainsi qu'une valeur de MFR ("Melt flow index", indice d'écoulement à l'état fondu) de 0,1 à 3,0 g/10 min.

2. Récipient en polycarbonate ramifié selon la revendication 1, **caractérisé en ce que**, à la préparation du polycarbonate ramifié, on a mis en oeuvre le phénol et/ou des alkylphénols et/ou des arylphénols.

3. Récipient en polycarbonate ramifié selon la revendication 1, **caractérisé en ce que**, à la préparation du polycarbonate ramifié, on a mis en oeuvre le phénol, et **en ce que** le polycarbonate ramifié contient en tant qu'agents ramifiants le 1,1,1-tris-(4-hydroxyphényl)éthane (THPE) et/ou le 3,3-bis-(3-méthyl-4-hydroxyphényl)-2-oxo-2,3-dihydroindole (IBK, insatine-bis-crésol).

4. Récipient en polycarbonate ramifié selon la revendication 1, **caractérisé en ce que**, à la préparation du polycarbonate ramifié, on a mis en oeuvre des alkylphénols et/ou des arylphénols et **en ce que** le polycarbonate ramifié contient en tant qu'agents ramifiants le 1,1,1-tris-(4-hydroxyphényl)éthane (THPE) et/ou le 3,3-bis-(3-méthyl-4-hydroxyphényl)-2-oxo-2,3-dihydroindole (IBK, insatine-bis-crésol).

5. Récipient en polycarbonate ramifié selon la revendication 4 **caractérisé en ce que**, à la préparation du polycarbonate ramifié, on a utilisé en tant qu'arylphénol le p-tert-cumylphénol.

6. Récipient en polycarbonate ramifié selon la revendication 4, **caractérisé en ce que**, à la préparation du polycarbonate ramifié, on a utilisé en tant qu'alkylphénol le p-tert-butylphénol ou l'isooctylphénol.

7. Récipient en polycarbonate ramifié selon l'une des revendications 1 à 6, **caractérisé en ce que** le polycarbonate ramifié est un homopolycarbonate ramifié à base du bisphénol A.

8. Récipient selon l'une des revendications 1 à 7, **caractérisé en ce qu'**il s'agit d'un récipient pour liquide.

9. Récipient selon l'une des revendications 1 à 7, **caractérisé en ce que** le récipient est une bouteille d'eau.

10. La fabrication des récipients selon l'une des revendications 1 à 9 par le procédé d'injection-soufflage.

11. La fabrication des récipients selon l'une des revendications 1 à 9 par le procédé d'extrusion-soufflage.

12. L'utilisation des récipients selon l'une des revendications 1 à 9 pour l'emballage, le stockage ou le transport de liquides, de matières solides ou de gaz.

13. Polycarbonate ramifié **caractérisé en ce qu'**il a, à 260°C sous un cisaillement de 10 s⁻¹ une viscosité à l'état fondu de 6500 à 8000 Pas et à 260°C sous un cisaillement de 1000 s⁻¹ une viscosité à l'état fondu de 880 à 1500 Pas, ainsi qu'une valeur de MFR ("Melt flow index", indice d'écoulement à l'état fondu) de 0,1 à 3,0 g/10 min.

14. Polycarbonate ramifié selon la revendication 13, **caractérisé en ce que**, à sa préparation, on a mis en oeuvre le phénol et/ou des alkylphénols et/ou des arylphénols.

15. Polycarbonate ramifié selon la revendication 13, **caractérisé en ce que**, à sa préparation, on a mis en oeuvre le phénol et **en ce qu'**il contient en tant qu'agents ramifiants le 1,1,1-tris-(4-hydroxyphényl)-éthane (THPE) et/ou le 3,3-bis-(3-méthyl-4-hydroxyphényl)-2-oxo-2,3-dihydroindole (IBK, insatine-bis-crésol).

16. Polycarbonate ramifié selon la revendication 13, **caractérisé en ce que**, à sa préparation, on a mis en oeuvre des alkylphénols et/ou des arylphénols et **en ce qu'**il contient en tant qu'agents ramifiants le 1,1,1-tris-(4-hydroxyphényl)éthane (THPE) et/ou le 3,3-bis-(3-méthyl-4-hydroxyphényl)-2-oxo-2,3-dihydroindole (IBK, insatine-bis-crésol).
